Europäisches Patentamt

(19) European Patent Office

Office européen des brevets

(11) Numéro de publication: **0 118 350**

A1

## (12) DEMANDE DE BREVET EUROPEEN

(21) Numéro de dépôt: **84400334.3**

(22) Date de dépôt: **17.02.84**

(51) Int. Cl.³: **B 26 B 15/00**
**A 01 G 3/03**

(30) Priorité: **18.02.83 FR 8302660**

(43) Date de publication de la demande:
**12.09.84 Bulletin 84/37**

(84) Etats contractants désignés:
**AT BE CH DE FR GB IT LI LU NL SE**

(71) Demandeur: **SOCIETE D'ETUDES ET DE RECHERCHES
DE L'ECOLE NATIONALE SUPERIEURE D'ARTS ET
METIERS en abrégé S E R A M
151, Boulevard de l'Hôpital
F-75013 Paris(FR)**

(72) Inventeur: **Duchamp, Robert, Prof.
34, Boulevard de la Perruque
F-34000 Montpellier(FR)**

(74) Mandataire: **Chevallier, Robert Marie Georges
Cabinet BOETTCHER 23, rue La Boétie
F-75008 Paris(FR)**

(54) Sécateur à moteur électrique.

㊻ La lame de coupe (10) a un doigt de manoeuvre (11) auquel est attaché un câble (13) fixé à une poulie (7) calée sur l'arbre (6) du moteur (2), cependant qu'un inverseur (14) est disposé pour être manoeuvré par le doigt (11) quand celui-ci arrive à la fin de sa course pour que le moteur (2) tourne aussitôt en sens inverse en permettant la réouverture du sécateur sous l'effet d'un ressort de rappel (12).

Fig.2

EP 0 118 350 A1

Sécateur à moteur électrique.

L'invention a pour objet un sécateur dont l'emploi est facilité par l'adjonction d'un moteur électrique qui fournit la force nécessaire au fonctionnement.

Un sécateur électrique selon l'invention comprend un corps creux se terminant à une extrémité par une tête et contenant un moteur électrique ————— à basse tension ; ce moteur s'étend dans le sens longitudinal du corps creux et il a un arbre sorti situé dans la tête. Cette dernière est pourvue à son extrémité avant éloignée du corps d'une contre-lame fixe sur laquelle est montée pivotante une lame de coupe se prolongeant par un doigt de manoeuvre au-delà de son pivot. Un ressort de rappel repousse la lame de coupe en position d'ouverture.

Un moyen d'accouplement apte à transformer la rotation de l'arbre du moteur en déplacement circulaire du doigt de manoeuvre est interposé entre l'arbre et le doigt afin de déplacer celui-ci entre une première position d'ouverture du sécateur et une seconde position de fermeture du sécateur. Un micro-interrupteur - inverseur est disposé pour être manoeuvré par le doigt quand ce dernier arrive à sa seconde position pour que soit inversée la rotation du moteur pendant une durée déterminée correspondant à la réouverture du sécateur.

Le corps creux peut être complété à l'opposé de la tête par un magasin destiné à recevoir des piles ou une batterie d'accumulateurs électriques alimentant le moteur. En variante, en vue d'une plus grande autonomie, un câble électrique peut s'étendre du corps creux jusqu'à une source d'électricité conçue, par exemple, pour être suspendue à la ceinture.

On donnera maintenant, sans intention limitative et sans exclure aucune variante, une description d'un exemple de réalisation. On se reportera au dessin annexé dans lequel :

- la figure 1 est une vue de côté, en élévation, d'un sécateur électrique conforme à l'invention ,

- la figure 2 est une vue analogue à la figure 2 montrant l'intérieur du sécateur électrique, une moitié du boîtier de protection étant supposée enlevée ,

- la figure 3 est une vue en coupe selon III-III de la figure 2.

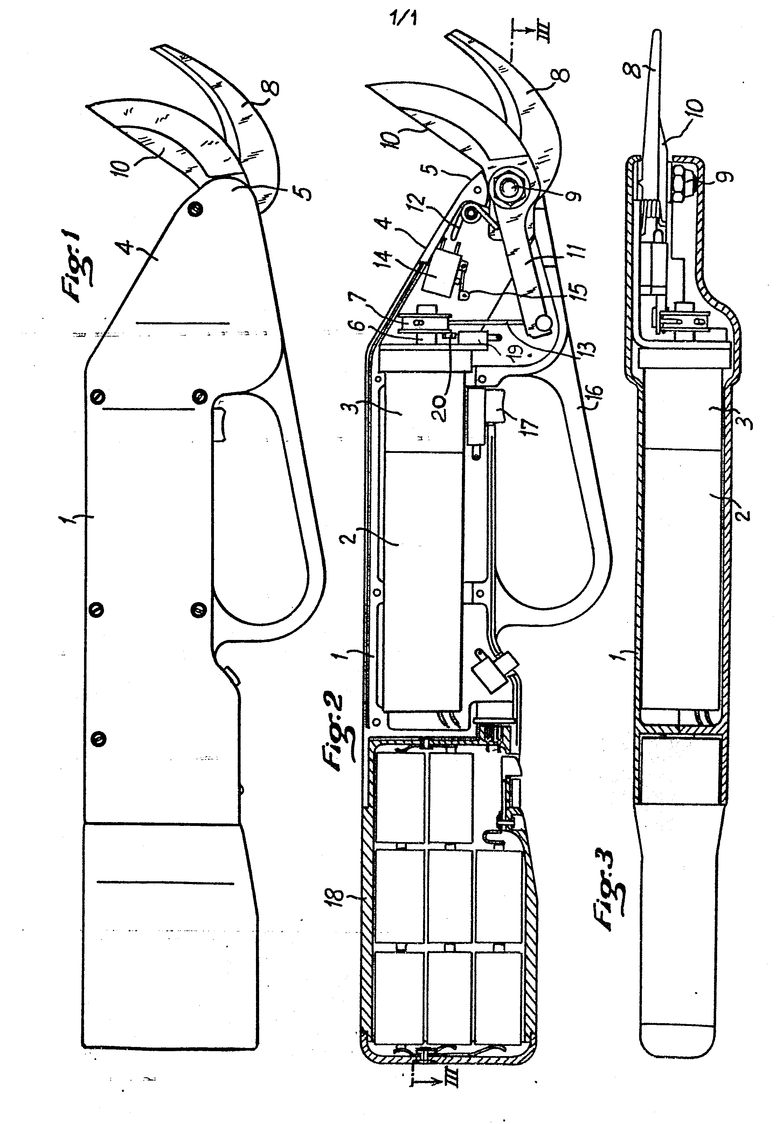

Un sécateur conforme à l'invention comprend un corps creux 1 qui contient un moteur électrique 2 complété comme il est habituel par un réducteur 3. Le corps 1 est allongé, ainsi que le moteur 2, pour être facile à saisir dans une main et il se termine à une extrémité par une tête 4 qui a, de préférence, comme le montre la fig. 1, un profil sensiblement triangulaire, avec un sommet 5, d'épaisseur limitée au minimum nécessaire comme on peut le voir sur la figure 3. Le moteur 2 a un arbre sorti 6 qui est situé à l'intérieur de la tête 4 où il est muni d'une poulie 7 calée en rotation.

Dans la tête 4 et dans la région du sommet 5 est fixée une contre-lame 8 sur laquelle est articulée autour d'un pivot 9 une lame de coupe 10 ; toutes deux sont saillantes hors de la tête 4 à partir du sommet 5 dans le sens général longitudinal du corps 1 et du moteur 2. La lame de coupe 10 est prolongée au-delà du pivot 9 par un doigt de manoeuvre 11 qui s'étend à l'intérieur de la tête 4 jusqu'au droit de la poulie 7.

Un ressort de rappel 12, en fil replié en boucle, est fixé à une paroi de la tête 4 de façon à pousser le doigt de manoeuvre 11 et à mettre la lame de coupe 10 en position d'ouverture.

Un câble 13 est fixé par une extrémité à la poulie 7 et par son extrémité opposée à l'extrémité du doigt de manoeuvre 11. Le diamètre de cette poulie 7 est déterminé pour que le câble 13 s'y enroule en totalité, en 2/3 de tour environ, mettant ainsi la lame de coupe 10 en position de fermeture totale.

Un micro-interrupteur - inverseur 14 est fixé aussi à la paroi de la tête 4 à un endroit où son élément de commande 15 est rencontré par le doigt 11 quand la lame 10 arrive à sa position de fermeture. Cet inverseur 14 provoque l'inversion immédiate de la rotation du moteur 2 juste pendant la durée nécessaire à l'ouverture du sécateur sous l'effet du ressort de rappel 12.

L'emploi d'une poulie 7 et d'un câble 13 est particulièrement simple et avantageux pour transformer la rotation de l'arbre 6 du moteur 2 en pivotement du doigt de manoeuvre 11 ; cependant tout autre moyen équivalent pourrait être utilisé en variante.

Le corps creux 1 est enfermé dans un boîtier démontable en partie et ayant sur un côté, dans le plan des lames 8, 10, une poignée 16 à l'intérieur de laquelle est placé un bouton 17 de commande de la marche du moteur 2. Le corps creux 1 est complété à l'opposé de la tête 4 par un magasin 18 destiné à recevoir des piles ou une batterie d'accumulateurs électriques assurant l'alimentation du moteur 2. En variante, un câble électrique (non représenté) pourrait s'étendre jusqu'à une source d'énergie électrique se suspendant à la ceinture, par exemple.

La lame de coupe 10 étant en position d'ouverture, quand une branche à couper a été introduite entre les lames, une pression sur le bouton 17 fait que l'arbre 6 entraîne la poulie 7 dans le sens de l'enroulement du câble 13 et de la fermeture du sécateur jusqu'à ce que le micro-interrupteur inverseur 14 soit actionné par le doigt 11 et commande une rotation en sens inverse et de même amplitude de la poulie 7, ce qui permet la réouverture automatique de la lame de coupe 10.

Selon une variante, pour arrêter le moteur 2 en position d'ouverture totale de la lame de coupe 10, on peut prévoir dans la tête 4 un micro-interrupteur 19 placé sur la trajectoire d'une came 20 calée sur la poulie 7. Quand cette came 20 rencontre le micro-interrupteur 19 elle ouvre le circuit d'alimentation du moteur 2. La came 20 est mise à une position qui correspond à la position d'ouverture totale de la lame de coupe 10.

## REVENDICATIONS

1. Sécateur électrique ayant un corps creux (1), une tête (4), une contre-lame (8) fixée à cette tête (4), une lame de coupe (10) articulée sur cette contre-lame (8), un ressort de rappel (12) repoussant la lame de coupe (10) en position d'ouverture, caractérisé en ce que le corps creux (1) contient un moteur électrique ayant un arbre (6), la lame de coupe (10) est prolongée au-delà de son pivot d'articulation (9) sur la contre-lame (8) par un doigt de manoeuvre (11) et un moyen d'accouplement (7, 13) apte à transformer la rotation de l'arbre (6) en déplacement de pivotement du doigt de manoeuvre (11) relie cet arbre (6) et ce doigt de manoeuvre (11).

2. Sécateur selon la revendication 1 caractérisé en ce qu'un micro-interrupteur - inverseur (14) est disposé pour être actionné par le doigt de manoeuvre (11) quand celui-ci arrive à sa position qui correspond à la fermeture des lames du sécateur, afin de provoquer une rotation immédiate en sens inverse du moteur (2) pendant la durée nécessaire à l'ouverture des lames (8, 10) sous l'action du ressort de rappel (12).

3. Sécateur selon la revendication 1 caractérisé en ce que le moyen d'accouplement comprend une poulie (7) calée en rotation sur l'arbre (6) du moteur (2) et un câble (13) accroché par une extrémité à cette poulie (7) et par l'extrémité opposée au doigt de manoeuvre (11).

4. Sécateur selon la revendication 3 caractérisé en ce que la poulie (7) est pourvue d'une came (20) disposée pour agir sur un micro-interrupteur (19) qui coupe l'alimentation électrique du moteur (2) au moment où la lame de coupe (10) arrive à sa position d'ouverture totale.

*Fig:1*

*Fig:2*

*Fig:3*

1/1

Office européen
des brevets

**RAPPORT DE RECHERCHE EUROPEENNE**

EP 84 40 0334

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | US-A-3 178 816 (SCHMID) <br> * Colonne 2, ligne 35 - colonne 3, ligne 19; colonne 4, lignes 15-60; figures 1,2 * | 1,2,4 | B 26 B 15/00 <br> A 01 G 3/03 |
| Y | . | 1,3 | |
| | --- | | |
| Y | DE-C- 816 616 (MORELL) <br> * Pages 2,3; figure 1 * | 1,3 | |
| | --- | | |
| X | US-A-3 401 455 (GEBAUER) <br> * Colonne 2, ligne 63 - colonne 3, ligne 8; figure 1 * | 1 | |
| | --- | | |
| A | FR-A-1 276 045 (VIESI) <br> * Page 4, colonne de droite, dernier paragraphe - page 5, colonne de droite, paragraphe 1 * | 3 | |
| | ----- | | DOMAINES TECHNIQUES RECHERCHES (Int. Cl. ³) <br><br> B 26 B <br> A 01 G |

Le présent rapport de recherche a été établi pour toutes les revendications

| Lieu de la recherche <br> LA HAYE | Date d'achèvement de la recherche <br> 25-05-1984 | Examinateur <br> WOHLRAPP R.G. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82